Europäisches Patentamt

European Patent Office

Office européen des brevets

(11) Publication number: **0 395 119**
**A2**

# EUROPEAN PATENT APPLICATION

(21) Application number: **90109205.6**

(22) Date of filing: **25.07.85**

(51) Int. Cl.⁵: **G11B 5/49, G11B 5/245,**
**//G11B5/53,G11B5/588**

This application was filed on 16.05.1990 as a divisional application to the application mentioned under INID code 60.

(30) Priority: **16.08.84 US 641817**

(43) Date of publication of application:
**31.10.90 Bulletin 90/44**

(60) Publication number of the earlier application in accordance with Art.76 EPC: **0 171 957**

(84) Designated Contracting States:
**AT BE CH DE FR GB IT LI LU NL SE**

(71) Applicant: **AMPEX CORPORATION**
**401 Broadway M.S. 3-35**
**Redwood City California 94063-3199(US)**

(72) Inventor: **Gooch, Beverley R.**
**703 Chopin Drive**
**Sunnyvale, State of California(US)**

(74) Representative: **Horton, Andrew Robert Grant et al**
**BOWLES HORTON Felden House Dower Mews High Street**
**Berkhamsted Hertfordshire HP4 2BL(GB)**

(54) Magnetic saturation controlled scanning magnetic transducer.

(57) A magnetic transducer comprises a magnetic core having confronting core portions (360, 360a) with poles abutting at a transducing gap plane to define a transducing gap. Control means are arranged to gradually saturate the face portions of the core portions core portions in respective opposite senses to move a permeable transducing zone. Each magnetic core portion has a plurality of stacked magnetic laminations (361) separated by nonmagnetic conductive lamintaions (363). Each said control means comprises a conductive drive line (368) extending across said magnetic core width inwardly of and at a selected distance from the plane (380) of said transducing gap and the respective transducer face portion, said drive line being conductively connected with said conductive laminations and wherein said conductive laminations of each magnetic core portion are further coupled to selectively apply control currents to the respective conductive drive line for selectively saturating said transducer face portions.

FIG 20

## BACKGROUND OF THE INVENTION

In wideband magnetic signal recording, great emphasis is on obtaining a high relative transducer-to-recording medium speed. Increasing the speed of the recording medium past a stationary transducer is limited by large medium consumption which would result, as well as by mechanical limitations associated with the high speed of transport.

Rotary head transducers utilized in magnetic tape recorders represent a significant development in increasing the relative head-to-tape speed. Here the transducer rotates at high speed in contact with a relatively slowly advancing magnetic tape. Depending on the angle at which the transducer sweeps the tape there are two basic types of rotary scan recorders, which are generally referred to as transverse and helical scan recorders. There are many problems associated with obtaining a desired accuracy and reproducibility of the signal recorded by rotary head recorders. For example, it is necessary to maintain very small mechanical tolerances of the rotating drum, the transducer structure and the location of the transducer within the drum. At the same time it is necessary to accurately maintain the rotational speed of the drum with respect to the longitudinal tape speed.

In magnetic recorders utilizing electromagnetically controlled scanning transducers the disadvantages associated with mechanically rotating the transducers are eliminated. Here the transducers are stationary and the high scanning speed is obtained by electromagnetically scanning the signal to be transduced across the width of the transducer and thereby across the recording medium.

For example, one known scanning magnetic transducer has stacked magnetic laminations separated from each-other by nonmagnetic spacers. Each lamination represents a closed magnetic circuit comprising a transducing gap. The stacked laminations have leg portions of controlled width gradually increasing in opposite directions on opposite sides of the transducer which leg portions are linked by control windings. The scanning operation is obtained by gradually saturating the leg portions on opposite sides of the transducer so that only one lamination at a time remains in a transducing mode. The location of the operating lamination is controlled by control currents applied to the control windings.

In this type of prior art transducer, scanning is obtained by sequentially interrupting the magnetic circuit of each lamination thereby interrupting the transducing flux path. Because it is necessary to use leg portions of varying width, the controlled width portions, and resulting interruption zone, must be at distant locations from the transducing gap and transducer face. Consequently the unsaturated portions facing a recording medium are susceptible to picking up crosstalk from adjacent active laminations or stray flux from adjacent recorded signal tracks on the medium. These picked-up signals may then be rerecorded on the medium or, at playback, they may leak into the magnetic circuit of an adjacent active element and cause degradation of the playback signal provided thereby. It will be appreciated that the above indicated disadvantages become more significant with increased frequency and density of recording.

It is a further significant disadvantage of these prior art transducers that, in order to reduce crosstalks, between the laminations each magnetic lamination of the stack must be physically and magnetically separated from adjacent laminations. Therefore, only an incremental scanning motion across the medium is possible and this is obtained by sequentially switching on/off the magnetic circuits of adjacent laminations, that is, in a discrete step-like manner, rather than continously. Also, track width must thus be not less than the width of a single lamination and is adjustable only to integral multiples of this width.

The foregoing is a disadvantage particularly in high frequency wideband recording/reproduction on narrow tracks where continuous scanning as well as accurately locating the transducing element over a narrow track are essential requirements for high quality performance.

## SUMMARY OF THE INVENTION

These disadvantages are overcome by the scanning transducer of the present invention which has control means which selectively saturate a core portion adjacent to the transducing gap and facing the recording medium. Each saturated core portion defines an adjacent nonsaturated portion and the control means are arranged within each core portion such that a desired steep magnetic permeability versus flux density gradient is obtained across the transducer width. The nonsaturated core portions on opposite sides of the transducer overlap to define a transducing zone of a desired width extending across the gap.

In the transducer of the invention crosstalk or stray flux pick up by non-operating portions of the transducer core is substantially eliminated.

Furthermore, the preferred embodiments of the invention do not require the use of discretely operating separate magnetic laminations. Thus, the location of the highly permeable transducing zone can be continously controlled along the width of the transducer by the electromagnetic control means. Any desired width of the transducing zone can be obtained by selecting corresponding control current magnitudes. The transducing zone width is thus not limited to the width of one or more stacked transducing laminations, as in the prior art transducers. Consequently, in the non-laminated embodiments of the invention, the transducing zone can be narrowed, widened or otherwise modified by the electromagnetic means in a continuous manner.

In accordance with a preferred embodiment of the invention, the above-mentioned desired steep flux density versus permeability gradient across the transducer width is obtained by arranging in each confronting core a control winding which is angularly displaced with respect to both the transducer face and transducing gap plane, respectively. A saturable core portion in the form of a wedge section is thereby formed, including an area between the transducer face and transducing gap plane. The wedge sections in the confronting cores are oppositely oriented such that their cross sectional areas increase in opposite directions on each side of the transducing gap. The cross-sectional areas, including the face of each core, are selectively saturated by applying respective control currents to the control windings. The saturated cross sectional areas of each core define therebetween a non-saturated highly permeable transducing zone which extends at the transducer face across the transducing gap.

In a further preferred embodiment of the invention, the desired steep gradient is obtained at the transducer face by providing control flux paths of a substantially constant cross section and gradually increasing lengths in opposite directions across the width of each core.

Alternative embodiments of the invention include a laminated core structure comprising a plurality of magnetic laminations separated from each-other by conductive laminations. A conductive drive line extends through each core at a selected distance from the transducer face and transducing gap plane. Portions of the drive line are connected to the conductive laminations. Control currents are differentially switched into these portions of the drive line to saturate portions of selected magnetic lamination at the transducer face adjoining the transducing gap. While these alternative embodiments have laminated core structures, they eliminate crosstalk pick-up at the transducer face.


### BRIEF DESCRIPTION OF THE DRAWINGS


FIGURE 1A is a schematic perspective view illustrating operation of a prior art magnetic transducer without the electromagnetically controlled scanning operation.

FIGURE 1B shows orientation of magnetic particles on a tape as recorded by the transducer of FIGURE 1A.

FIGURE 1C is a schematic perspective view illustrating operation principle of an electromagnetically controlled scanning magnetic transducer of the invention.

FIGURE 1D is a front elevation view of the transducer of FIGURE 1C.

FIGURES 1E and 1F show various operation modes of the transducer of FIGURE 1C.

FIGURE 2A is a simplified perspective view of an electromagnetically controlled scanning magnetic transducer in accordance with a preferred embodiment of the invention.

FIGURES 2B to 2D respectively show various forms of recording which can be obtained when utilizing the transducer of the present invention.

FIGURE 3A is a schematic diagram of a control circuit utilized to drive the transducer of the invention.

FIGURE 3B is a control voltage versus control current characteristic obtained by the circuit of FIGURE 3A.

FIGURE 4 is a more detailed representation of the transducer shown in FIGURE 2A.

FIGURE 5 is an enlarged perspective view of a satuarable wedge section of the transducer of FIGURE 4.

FIGURE 6 is an example of a flux density versus permeability characteristic of a well known magnetic material.

FIGURE 7A shows a front elevation view of oppositely oriented saturable wedge sections of the transducer of FIGURE 4 rotated by 90 degrees.

FIGURE 7B shows two superposed flux density versus permeability characteristics of FIGURE 6, each corresponding to one saturable wedge section of FIGURE 7A.

FIGURES 8 to 11 show a preferred method of manufacturing the transducer of FIGURES 2A and 4.

FIGURES 12 to 16 show another preferred embodiment of the invention;

FIGURES 17 to 20 show an alternative embodiment of the invention; and

FIGURES 21 to 25 show respective diagrams illustrating the operation of the embodiment of FIGURES 17 to 20.

## DETAILED DESCRIPTION

In the following specification and drawings like elements will be designated by like reference numerals. The description of similar elements and circuit portions may not be repeated with reference to subsequent drawing figures related to various embodiments of the invention.

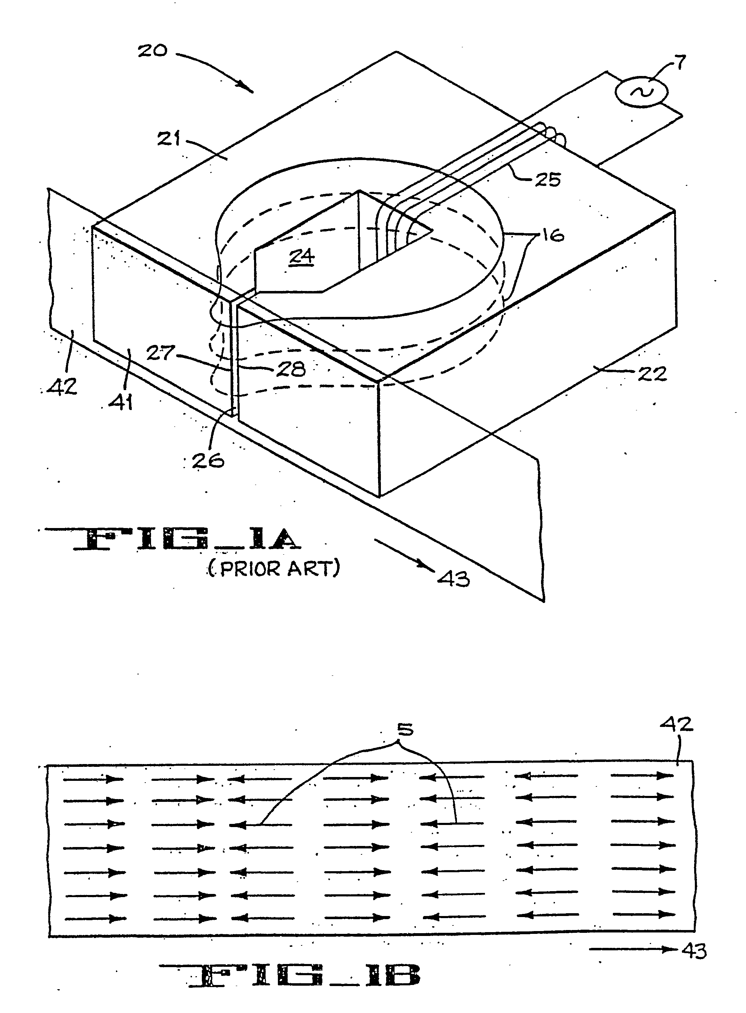

To facilitate description of the operating principle of the electromagnetically controlled scanning transducer of the invention a basic transducing operation of a known magnetic transducer will be first described with reference to FIGURES 1A and 1B without considering the electromagnetically controlled scanning operation. Thereafter the scanning operation will be described with reference to FIGURES 1C and 1D.

FIGURE 1A schematically shows a magnetic transducer 20 of a conventional design, having confronting magnetic core portions, also referred to as cores 21, 22 with poles 27, 28 defining a transducing gap 26 therebetween. A transducing winding window 24 is provided to accommodate transducing windings 25. The transducing gap 26 comprises a nonmagnetic material, for example silicon dioxide or glass, as well known in the art. When a recording signal current is applied to the transducing winding 25, for example form a signal source 7, for recording on a magnetic medium such as tape 42, a magnetic field is formed within the transducer as represented by flux lines 16. The magnetic field is emitted from the transducing gap 26 in the form of a fringing flux and engages the tape 42. The tape is shown in FIGURE 1A as transparent to reveal a portion 41 of the transducer 20, which faces the tape and which portion will be further referred to as face 41.

The fringing flux impresses on tape 42 a magnetic pattern corresponding to the signal in the winding 25. By advancing the magnetic tape past the transducing gap 26, for example in the direction of arrow 43, a changing magnetic signal pattern will be recorded along the tape as it is shown in FIGURE 1B by arrows 5.

When transducer 20 is utilized as a reproduce head, to reproduce a previously recorded signal such as shown at 5 on tape 42, the flux emanating from the longitudinally moving tape 42 engages the gap 26 and is picked up thereby. The transducer 20 changes the magnetic flux 16 traversing the transducing windings 25 into an electric signal that is proportional to the recorded flux.

In accordance with the present invention and as schematically shown in FIGURES 1C and 1D, the transducer face 41 may be selectively saturated on opposite sides of the transducing gap 26 as it is shown by cross-hatched saturated regions 57, 58. Saturation of regions 57, 58 is obtained by control means 8, 9 shown in phantom, respectively associated with each transducer core 21, 22. The control means 8, 9 comprise respective control windings (not shown) each linking one core 21, 22 in a manner which will be further described in more detail. The control means 8, 9 supply a control current $I1$, $I2$ to induce a control flux 47, 48 in each core 21, 22. The magnitudes of the control currents $I1$, $I2$ are selected such that the flux induced thereby saturates a region 57, 58 of a selected width $W1$, $W2$ in each core half as mentioned previously and as shown by cross-hatched areas in FIGURES 1C and 1D. The saturated regions 57, 58 define respective adjacent highly permeable nonsaturated portions or regions 40, 46 which overlap across the transducing gap 26. The overlapping portions 40, 46 define a highly permeable transducing zone 56 of a width $W3$, extending across the gap 26. It is seen from FIGURE 1C that the total transducing gap width $W = W1 + W2 + W3 = \text{const.}$

By increasing the magnitude of one control current, for example $I1$, while proportionally decreasing the magnitude of the other control current $I2$, the respective widths $W1$, $W2$, change proportionally and the transducing zone 56 can be selectively moved along the width $W$ of the transducing gap 26. For example, when it is desired to periodically scan the transducing zone 56 at a high speed along the transducer width $W$, a control circuit can be utilized which periodically changes inversely linearly the magnitudes of both currents $I1$, $I2$ thereby proportionally changing the widths $W1$, $W2$ of the saturated portions 57, 58. To maintain a constant width $W3$ of the transducing zone 56 during scanning, it is necessary to maintain a constant sum of the changing control currents, that is $I1 + I2 = \text{const.}$

It will be appreciated that in the preferred embodiment of the invention it is possible to continously change the width W3 of transducing zone 56 if desired, by changing the combined widths W1 + W2 of the saturated portions 57, 58. Consequently, the transducing zone width W3 can be continously narrowed, widened or otherwise modified.

As it is seen from FIGURE 1C, the transducing flux path 16 extends around the winding window 24 and intercepts the transducing winding 25. While the control flux lines 47, 48 extend in parallel planes with respect to transducing flux 16, the respective magnitudes of the control currents are selected such that the control flux 47, 48 does not link the transducing winding 25 to avoid any interference with the signal flux 16.

FIGURE 1E illustrates an example of one mode of operation in which the electromagnetically controlled scanning magnetic transducer 20 of FIGURE 1C is utilized for recording and/or reproduction. The transducer 20 is shown with the transducing gap area 26 sufficiently enlarged to allow showing therein a magnetization pattern corresponding to the transducing flux 16. In FIGURE 1E a magnetic medium, for example tape 42 is transported longitudinally, that is in the direction of arrow 43, in close proximity to the transducing gap 26, and substantially in perpendicular to the transducer width W. In this mode of operation the electromagnetic control means 8, 9 are utilized to periodically differentially saturate the regions 57, 58 thereby periodically varying the location of the transducing zone 56 along the width W of the transducer. By differentially saturating the regions 57, 58 it is understood that each control means 8, 9 saturates a selected width W1, W2, of each core 21, 22 respectively, on the opposite side of the transducing gap. The difference between the combined widths W1 + W2 and the core width W determines the resulting width W3 of the transducing zone 56 (W3 = W-(W1 + W2)). It is possible to change the transducing zone width W3 by changing the above-indicated combined widths W1 + W2, as previously mentioned.

Scanning operation along recording tracks, such as shown at 35 in FIGURE 1E, is obtained when the location of the transducing zone 56 moves along the width W, that is in the direction indicated by arrow 10, while the widths W1, W2 change inversely linearly with respect to each-other to maintain a constant width W3 of the transducing zone 56. In the above-described scanning operation, which is generally referred to as transverse recording/reproduction, the width W corresponds to the length of scan on the magnetic tape 42. This type or recording is characterized by a magnetization pattern extending substantially orthogonally to the direction of scan indicated by arrow 10, which pattern is recorded along parallel tracks 35 which in turn extend substantially orthogonally across the width of the tape 42. The length L of the transducing gap 26 corresponds to the recorded "track width" TW. In recording mode, the magnetic state of the tape will be determined by the direction of the record flux at the approximate "trailing edge" of the scanning track zone 56 which is advanced along the track 35 by the scanning action. It follows from the foregoing that the width W3 of the track zone 56 is comparable to gap length of a conventional rotating magnetic transducer which is utilized for transverse recording. Therefore the track zone width W3 must be smaller than the shortest wave-length to be recorded to obtain necessary high resolution.

In FIGURE 1F an example of another mode of operation of the scanning magnetic transducer 20 of FIGURE 1C is shown, as being utilized for recording/reproduction along a longitudinal track 13 of a magnetic tape 42, transported with respect to transducer 20 in a manner similar to that in FIGURE 1E. However, as different from FIGURE 1E, when transducer 20 is utilized for recording, the widths W1, W2 of the saturated regions 57, 58 are maintained constant by the control means 8, 9 thereby maintaining a fixed position and constant width W3 of the transducing zone 56. The foregoing is obtained by maintaining selected constant magnitudes of the control currents I1, I2 applied by means 8, 9. The resulting magnetization pattern obtained on the recorded track 13 is generally referred to as longitudinal recording.

When utilizing the transducer 20 of FIGURE 1F for reproducing a signal, such as recorded on track 13, the respective widths W1, W2 can be differentially varied by the control means to reposition the transducer zone 56 in either direction indicated by arrows 10, 11 that is, across the width W3 of track 13. The foregoing operation mode may be particularly useful to maintain an optimum position of the transducing zone 56 over a recorded track to optimize recording/reproducing performance. The latter mode of operation may be utilized when reproducing a signal recorded for example on transverse, helical or longitudinal tracks of a magnetic medium.

It is also possible to select one desired track width W3 for recording and another, for example narrow-er track width W3', for playback, by simply changing the widths W1, W2 of the saturated regions of each core, as previously mentioned.

In another operating mode the location of the transducing zone 56 can be repositioned with a desired high accuracy to predetermined discrete locations on a magnetic medium as it may be required in connection with a particular recording scheme.

It should be understood from the above description, that in all the above-indicated operation modes the transducer of the invention is saturated at its face and in proximity of the transducing gap. Consequently, susceptibility to any crosstalk or stray flux pick-up by a non-operating, electromagnetically blocked core portion is eliminated.

To obtain a high quality performance by the scanning transducer of the invention, a well defined boundary between adjacent saturated and nonsaturated areas of the cores 21, 22 is desirable. The foregoing is obtained by arranging the confronting magnetic cores and control windings within each core such a way that a maximum rate of change in permeablity between adjacent cross-sectional areas of each transducer core is obtained across the transducer width W. The foregoing assures that while a selected area at the face of each core is saturated by a control current, so that no appreciable flux passes therethrough, an immediately adjacent contiguous area remains sufficiently permeable as it is necessary for transducing information signals. Consequently, the performance of the transducer 20 depends on the steepness of a permeability versus flux density gradient between each adjacent saturated and non-saturated region within each core.

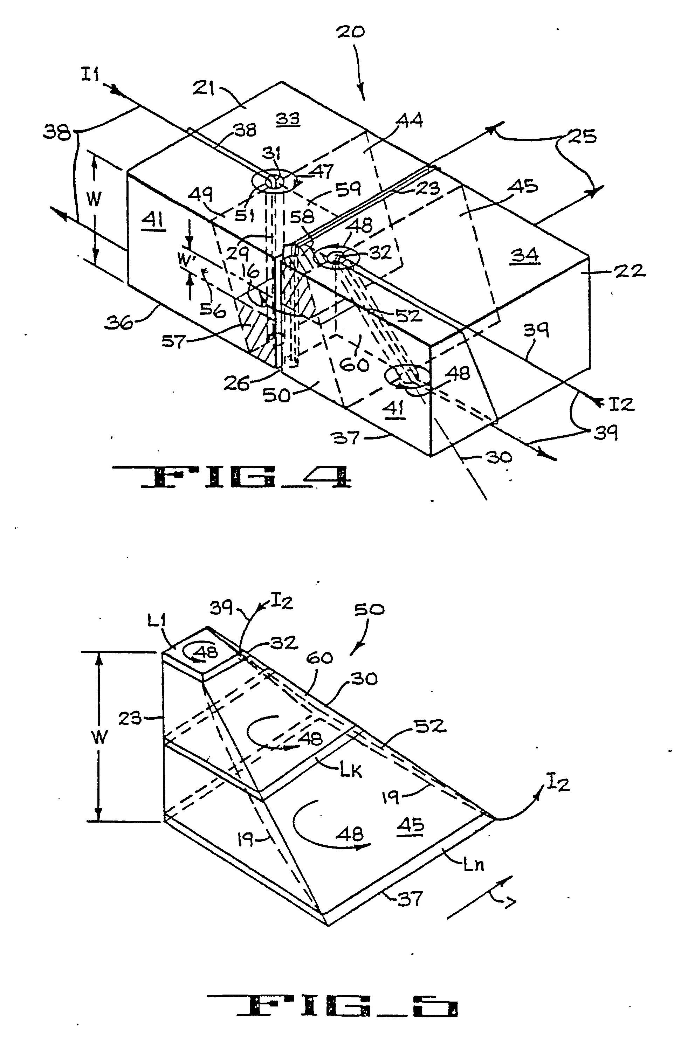

As an example, FIGURE 6 shows a well known permeability m versus flux density B characteristic of a suitable magnetic core material, for example ferrite PS52B made by Ampex Corporation. As it is seen from that characteristic, a relatively high permeability m, greater than 400, is obtained at a flux density B below $B1 = 4000$ Gauss, which high permeability is sufficient for a desired transducing operation. The saturation flux density of that material is approximately $B2 = 6000$ Gauss, corresponding to a permeability below 100, as shown in FIGURE 6. Consequently, for obtaining a desired rapid transition between a highly permeable region and an adjacent saturated region within the transducer core, the permeability must change rapidly from below 100 to over 400 in either direction, as it is seen from FIGURE 6.

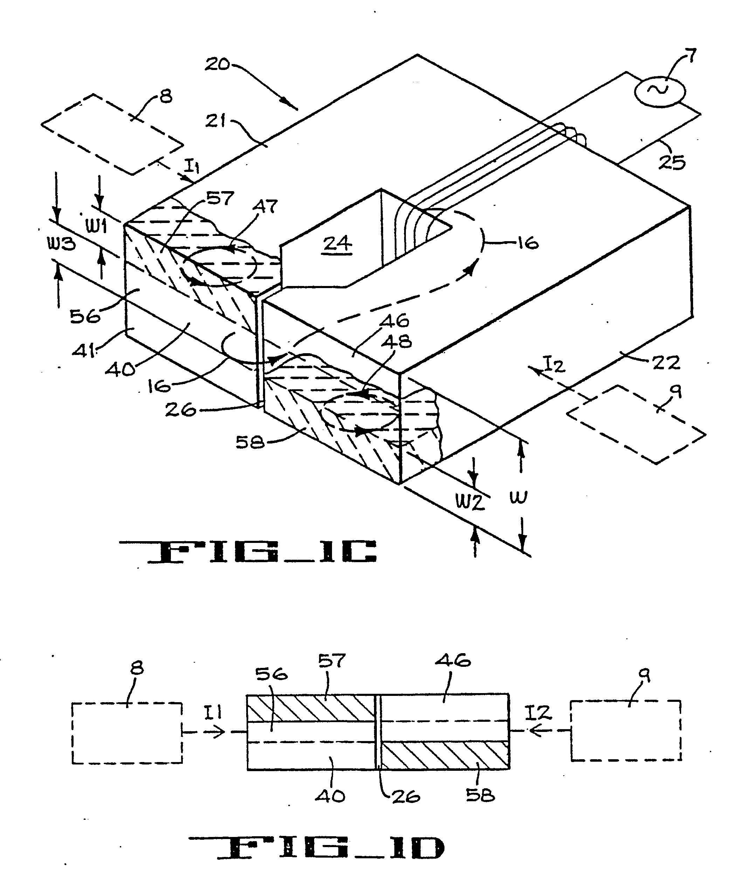

Now a preferred embodiment of the electromagnetically controlled scanning magnetic transducer of the present invention will be described in detail with reference to FIGURE 2A. A magnetic transducer 20 has two corresponding magnetic cores 21, 22 having confronting poles 27, 28 abutting at a smoothly lapped and polished transducing gap plane 23. A winding window 24 is provided in one or each core 21, 22 to accommodate transducing windings 25. A suitable nonmagnetic material is provided between pole faces 27, 28 to obtain a transducing gap 26, utilizing conventional transducing gap forming techniques. A transducer face 41, facing a magnetic medium for example tape 42, shown in FIGURES 2B to 2D, extends in a plane substantially perpendicular to the gap plane 23. The transducer may be contoured, if desired, as it is shown by interrupted lines 18, to obtain a desired contour and transducing gap depth respectively, utilizing well known contouring techniques.

In accordance with an important feature of the embodiment of FIGURE 2A, apertures 31, 32 are provided in each corresponding core 21, 22, respectively. These apertures extend across the entire width W of transducer 20 at respective selected angles to both the transducing gap plane 23 and to the face 41 of the transducer. Control windings 38, 39 are wound around each core 21, 22 in such a way that portions 51, 52 thereof extend through apertures 31, 32 respectively.

In the preferred embodiment of FIGURE 2A cores 21, 22 are manufactured as two identical core halves, for example from a block of magnetic ferrite material such as ferrite PS52B or single crystal ferrite. The apertures 31, 32 may be obtained by diamond drilling through the width of each core half, that is, from upper lateral surfaces 33, 34 to the opposite lower surfaces 36, 37 respectively. Each core half 21, 22 is smoothly lapped and polished at the gap plane 23. A suitable nonmagnetic transducing gap forming material, such as glass is provided on plane 23 of one or both cores, for example by sputtering in a vacuum. The thusly prepared core halves 21, 22 are assembled by rotating one core half with respect to the other one by 180 degrees so that the upper and lower surfaces thereof are reversed, to obtain confronting cores with an inversely symmetrical arrangement of the apertures 31, 32 with respect to planes 23 and 41, respectively. Thus, in the assembled confronting transducer cores 21, 22 the control winding apertures 31, 33 extend in an oppositely oriented angular relationship with respect to both the transducing gap plane 23 and face 41. The assembled core halves are glass-bonded together, utilizing well known bonding techniques, at the transducing gap plane 23, to obtain the transducing gap 26.

Alternatively, confronting cores 21, 22 could be made of a common solid block of magnetic material, if desired. In that case, a slot of a desired width corresponding to transducing gap length is provided inwardly of face 41, for example by grinding. The slot is subsequently filled with a suitable nonmagnetic material to obtain a transducing gap 26. The winding window 24 is then obtained by drilling across the transducer width utilizing known drilling techniques.

As it will follow from further detailed description, control windings 38, 39 serve to carry control currents I1, I2 for differentially saturating selected portions of each core 21, 22 at the transducer face 41 to obtain an unsaturated highly permeable transducing zone 56 extending across the transducing gap 26, as it has been described before with respect to FIGURES 1C and 1D.

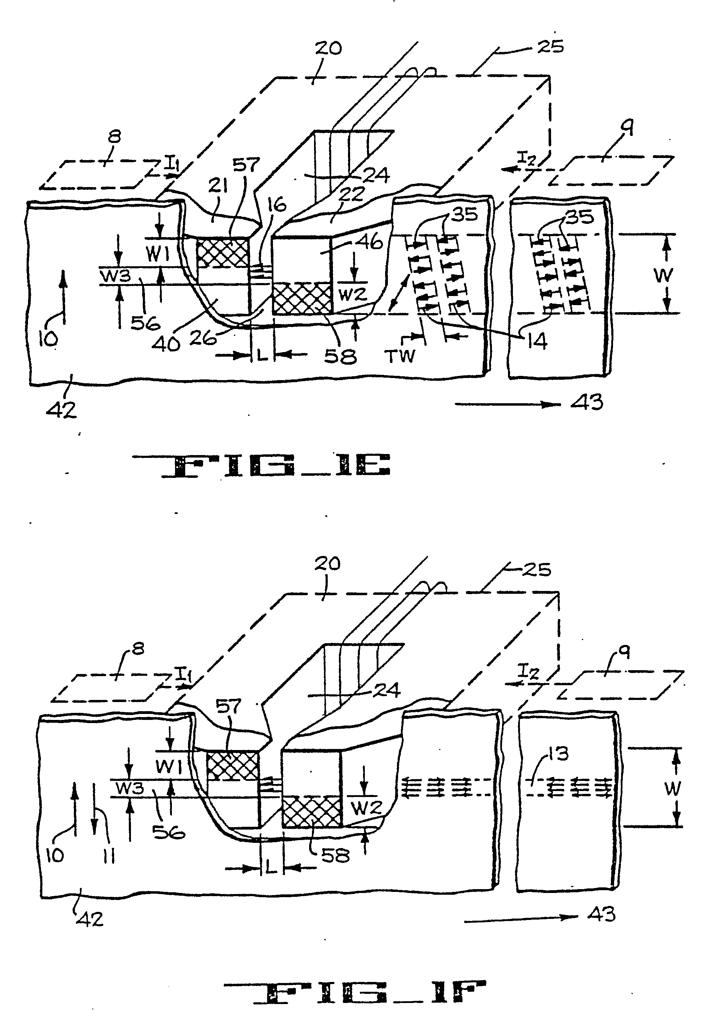

To obtain selected saturated regions at the face 41 of each core 21, 22 as previously described, a control circuit, for example shown in FIGURE 3A is utilized to supply respective control currents I1, I2 to control windings 38, 39 as it will be described below.

In the preferred embodiment the control currents I1, I2 are varied differentially to periodically scan a transducing zone of a constant width across the the width W of the transducer. Thereby an information signal is recorded or reproduced along transverse tracks 35 of a longitudinally moving magnetic tape 42, as shown in FIGURE 2B. It will be understood, however, that alternatively other recording/reproducing applications can be obtained.

For example, when current values I1, I2 are maintained constant the transducing zone will assume a fixed position. This latter application may be useful to obtain recording along longitudinal tracks such as shown at 13 in FIGURE 2D. During recording/reproduction on longitudinal or helical tracks, the position of the transducing zone may be stepped from track to track. In other applications recorded helical tracks as shown in FIGURE 2C may be reproduced by the transducer of the invention fixedly mounted in a rotating drum, while the position of the transducing zone may be moved across the recorded track width to assume optimum playback performance.

FIGURE 3A is an example of a schematic control circuit diagram 54 which is utilized to drive the control windings 38, 39 of transducer 20 of FIGURE 2A to control the position of a transducing track zone at face 41 along the width W of the transducer 20. In the presently described preferred embodiment the transducing zone 56 is periodically scanned along transverse tracks 35 of magnetic tape 42, as shown in FIGURES 1E and 2B. It will be understood however that the control circuit 54 may be adapted to obtain different operating modes of the transducer 20 when utilized in other recording/reproducing applications as previously mentioned.

The circuit 54 of FIGURE 3A utilizes a control voltage source 61 generating a periodically changing control voltage Vc. Voltage Vc is converted by the circuit of FIGURE 3A into differentially changing control currents I1, I2 as follows.

The voltage Vc is applied via a resistor 62 to an inverting input of a first operational amplifier 63, which has a feedback resistor 64, and represents a voltage follower. The output of amplifier 63 is connected via a further resistor 65 to an inverting input of a second operational amplifier 66 which has a feedback resistor 67. Amplifier 66 inverts the output signal of amplifier 63. The output of first amplifier 63 is also connected via a resistor 68 to an inverting input of a third operational amplifier 69 having a feedback resistor 70. The output of second amplifier 66 is connected via a resistor 71 to an inverting input of a fourth amplifier 72 having a feedback resistor 73. An adjustable potentiometer 74 is connected between a source of negative D.C. voltage and ground to obtain a control current offset Io. The output of potentiometer 74 is connected via a resistor 75 to the inverting input of third amplifier 69 and via a resistor 76 to the inverting input of fourth amplifier 72, respectively.

The output of the third amplifier 69 is connected to the previously described first control winding 38 of transducer 20, which in turn is connected via feedback resistor 70 to the inverting input of amplifier 69. Similarly, the output of the fourth amplifier 72 is connected to the previously described second control winding 39, whose second terminal is connected via feedback resistor 73, to the inverting input of amplifier 72. The connection between coil 38 and resistor 70 is grounded via a resistor 77. Similarly, the connection between coil 39 and resistor 73 is grounded via a resistor 78. The respective non-inverting inputs of all four operational amplifiers 63, 66, 69 and 72 are grounded. The amplifiers 69, 72 and respective resistors 70, 77 and 73, 78 represent a first and second current source, respectively.

In operation, the voltage Vc from source 61 is applied via voltage follower 63, 64 to a first current source 69, 70, 77 which applies to the first control winding 38 a control current I1, directly proportional to input voltage Vc. The voltage obtained at the output of amplifier 63 and inverted by the inverter 66, 67 is further applied to the second current source 72, 73, 78 which applies to the second control winding 39 a control current I2 inversely proportional to the input voltage $V_c$. The potentiometer 74 connected to a negative DC voltage sets a desired control current offset Io, which in the presently described embodiment is half way between the minimum and maximum control current values, that is Io = (Imax-Imin)/2, as it will be described below in more detail with reference to FIGURE 3B.

It follows from the foregoing description that when voltage Vc has a periodically changing amplitude between Vcmin and Vcmax as shown in the diagram of FIGURE 3B, circuit 54 converts the thusly changing control voltage into substantially linearly changing control currents I1, I2 obtained at the respective outputs of the first and second current source, respectively. The control currents I1, I2, thus change differentially, that is in opposite sense with respect to each other while changing substantially in linear proportion to the input voltage Vc as depicted in FIGURE 3B and defined by the following equations:

I1 = KVC + Io

I2 = -KVC + Io     (1)

where K and Io are constants dependent on the parameters of the circuit of FIGURE 3A and can be derived therefrom.

With further reference to the previously described preferred embodiment of FIGURE 2A, currents I1, I2 induce magnetic flux in the magnetic cores surrounding the control winding portions 51, 52 extending therethrough. The control currents I1, I2 are utilized to saturate selected regions of the magnetic cores 21, 22 at face 41 to obtain between the saturated regions an unsaturated highly permeable track zone in accordance with the present invention, as it is described below.

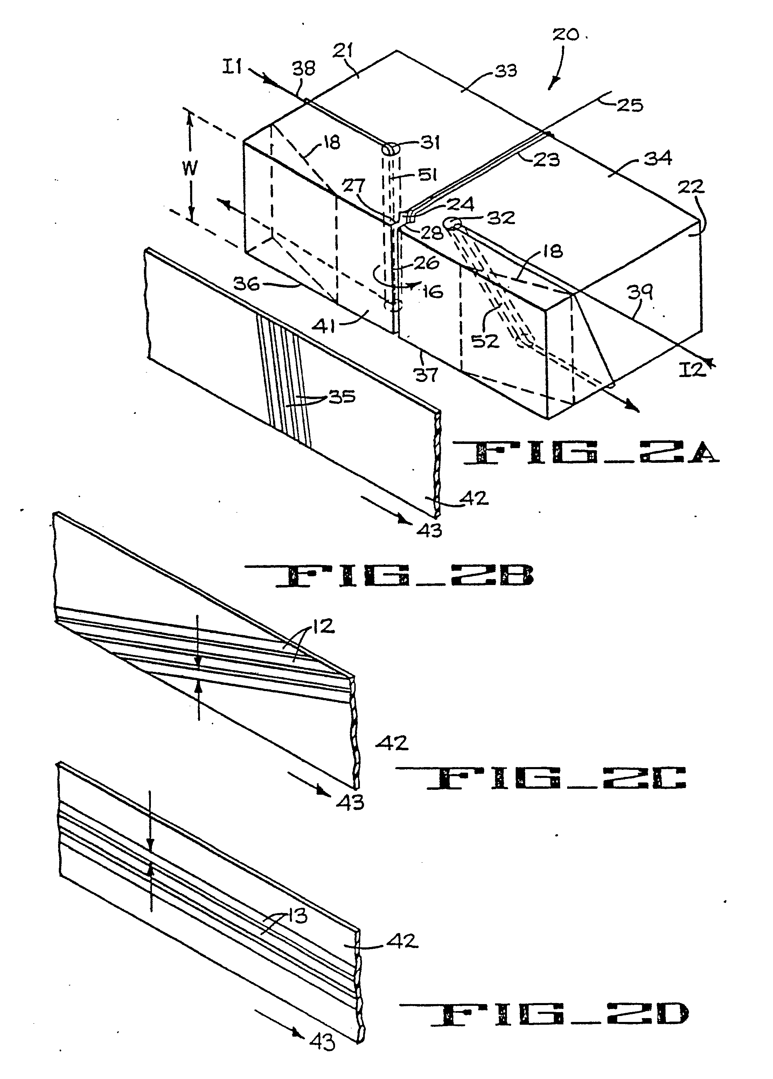

To facilitate further description, FIGURE 4 shows a more detailed schematic representation of the transducer 20. Two pairs of imaginary planes 44, 45 and 59, 60 are shown as being respectively superposed with the longitudinal axis of apertures 31, 32, respectively. Planes 44, 45 are parallel and intersect upper and lower lateral surfaces 33, 34 and 36, 37 respectively in lines parallel with the transducing gap plane 23. Planes 59, 60 intersect these lateral surfaces in lines perpendicular to the transducing gap plane 23.

It is seen from FIGURE 4 that the imaginary planes 44, 45, 59, 60, lateral surfaces 33, 34, 36, 37, gap plane 23 and face 41 form two oppositely oriented wedge sections 49, 50 each extending on the opposite side of the transducing gap plane 23. These wedge sections represent portions of magnetic cores 21, 22 to be selectively differentially saturated by the control currents I1, I2 to thereby define a desired transducing zone 56.

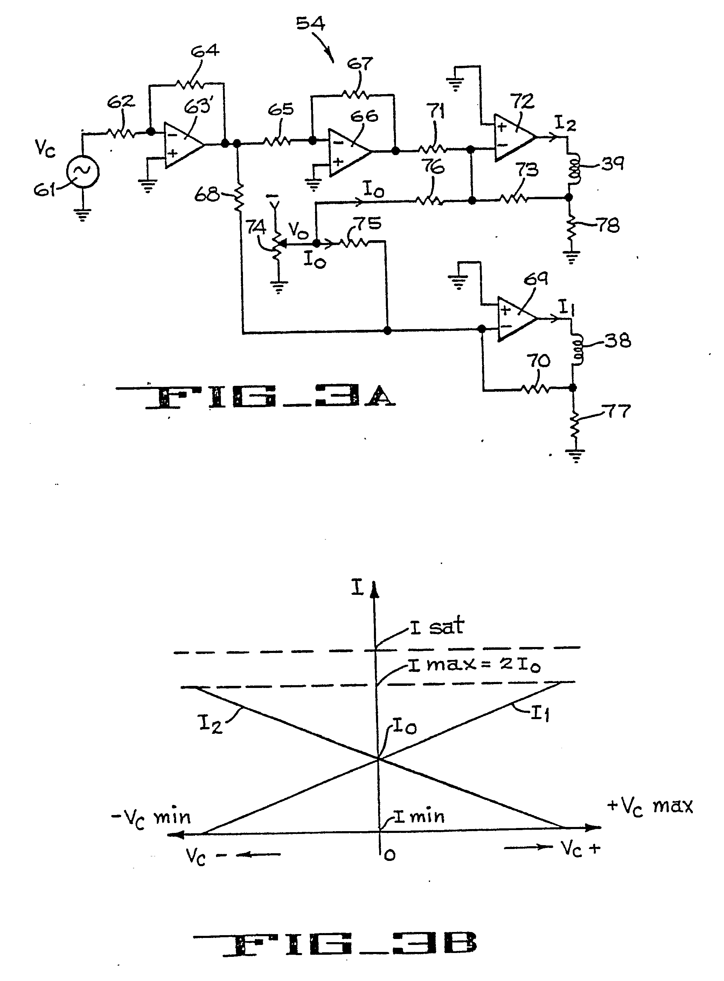

FIGURE 5 is an enlarged perspective view of one wedge section 50. Since both oppositely oriented wedge sections are substantially identical, the following description related to wedge section 50 also generally applies to wedge section 49. It is seen from FIGURE 4 that edge 30 of wedge section 50 in FIGURE 5 is defined as an intersection of imaginary planes 45, 60.

For a given width W of the transducing gap 26, wedge section 50 can be imagined as being divided into parallel cross-sectional areas L1 to Ln, extending perpendicularly to both planes 23, and 41, respectively, and having gradually increasing surface areas along the gap width. It is understood that the oppositely oriented wedge section 49 of transducer 20 will have corresponding cross-sectional areas gradually increasing in the opposite direction (not shown).

With further reference to FIGURES 4 and 5, when current I2 is applied to the control winding 39, it induces in the core 22 a corresponding magnetic flux represented by flux lines 48 extending around the winding portion 52. Flux lines 48 do not extend across the transducing gap 26 nor do they link the transducing windings 25 to minimize any interference between the control flux and the transducing signal flux within the transducer.

To assure proper scanning operation along the width of the transducer to obtain transverse recording or playback, the values of the oppositely changing currents I1, I2 are selected such that the control fluxes 47, 48 induced thereby saturate in succession the continuously increasing cross sectional areas L1 to Ln of the respective oppositely oriented wedge sections 49, 50 within each magnetic core half 21, 22. For example when applying to the control winding 39 a gradually increasing current I2, as shown in FIGURE 3B, the cross-sectional areas L1 to Ln of FIGURE 5 become gradually saturated from the smallest to the largest area, in direct proportion to the increasing amplitude of the control current I2. By periodically increasing the control current in one control winding while periodically proportionally decreasing the control current in the other control winding, the respective portions L1 to Ln of oppositely oriented wedge sections 49, 50 become periodically differentially saturated. In the preferred embodiment of FIGURE 4 the sum of the differentially changing currents I1 + I2 is maintained constant to obtain a constant width W3 of the transducing zone 56 at the transducer face 41, as previously described. It is understood from the foregoing description that the permeability of the saturated regions is approximately equal to that of air while the overlapping unsaturated portions have a relatively high permeability as it is necessary for signal recording/reproduction.

It is seen from the characteristic of FIGURE 3B, that by changing the control voltage from -Vcmin to +Vcmax the control current value I1 changes from Imin to Imax, where Imax is selected below the saturation current level Isat. Isat corresponds to a current value which is sufficient to saturate all the cross-sectional areas L1 to Ln, that is the entire wedge section, without leaving an unsaturated area therein. Since it is necessary to assure that an unsaturated area will remain in each wedge section 49, 50 for obtaining an overlapping transducing zone, the maximum control current Imax must be selected below the saturation current level Isat.

As noted before, the wedge sections 49, 50 are imaginary and are shown only to facilitate description of the operation of the preferred embodiment of the transducer in accordance with the invention.

Preferably, the apertures 31, 32 within core halves 21, 22 are arranged such that substantially square cross-sectional areas L1 to Ln are obtained. The foregoing assures that the wedge sections 49, 50 including face 41 will be saturated prior to saturating other more remote core portions from the face part. At the same time control current values necessary to obtain saturation are minimized.

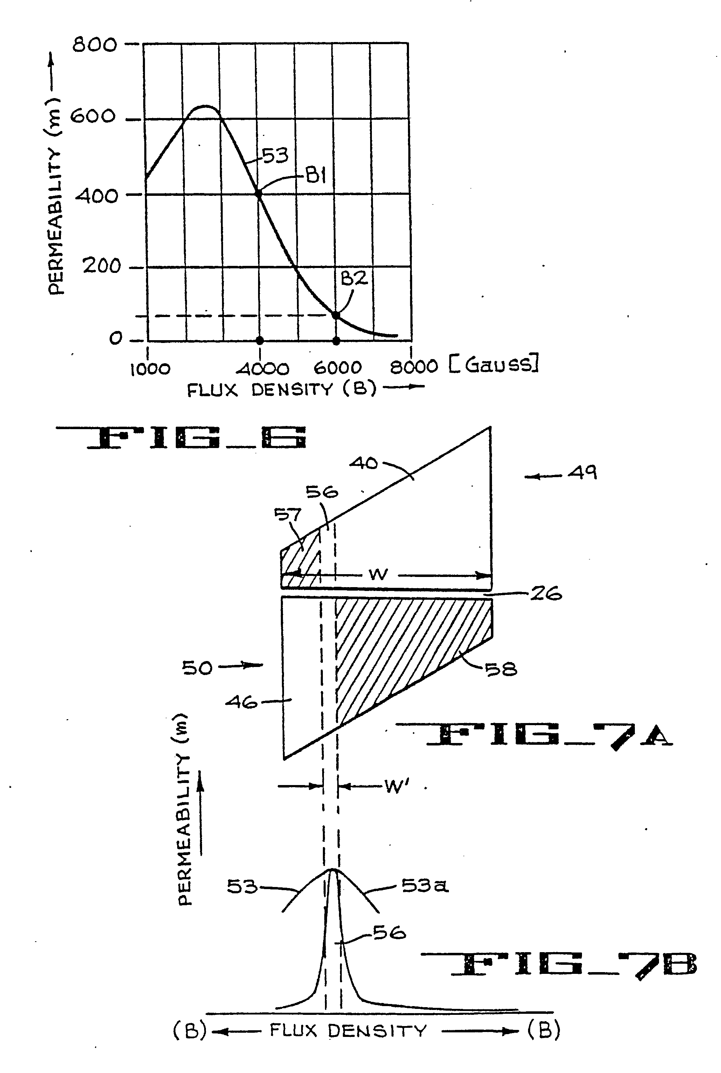

FIGURE 7B shows an example of two superposed flux density versus permeability characteristics 53, 53a, each corresponding to the characteristic of FIGURE 6, and each pertaining to one oppositely oriented wedge section 49, 50. FIGURE 7A is a schematic front view representation of wedge sections 49, 50 of FIGURE 4 rotated by 90 degrees. The cross-hatched areas 57, 58 represent the saturated regions that is, core portions having a permeability less than 100. The other core portions in FIGURE 7A represent nonsaturated highly permeable areas 40, 46 having a permeability over 400. The transducing zone 56 which extends across the transducing gap 26 and which is formed by the overlapping unsaturated highly permeable regions 40, 46, corresponds to overlapping portions of superposed characteristics 53, 53a which portions indicate permeability between 100 and 400. From FIGURES 7a and 7B it is seen that a well defined transducing zone 56 requires a characteristic having a permeability versus flux density gradient as sharp as possible. The latter requirement can be obtained by selecting a transducer core material with a steep characteristic curve and by designing the wedge section such that large flux density changes take place between adjacent cross-sectional areas over the entire scanning length. To further increase the permeability gradient a head core material is preferably used having a magnetic anisotrophy and oriented with an easy axis of magnetization perpendicular to the transducing gap plane.

To further maximize the flux density gradient between two adjacent cross-sectional areas for obtaining a desired maximum permeability versus flux density gradient, it is preferable to approximate the shape of the wedge sections to that of the characteristics of FIGURE 6, that is to obtain exponentially increasing cross sectional areas L1 to Ln of the wedge sections 49, 50. The foregoing can be obtained by providing an exponential shape of apertures 31, 32, extending through the cores 21, 22. However, with respect to design considerations, it may be difficult to form such an opening in a solid core of magnetic material.

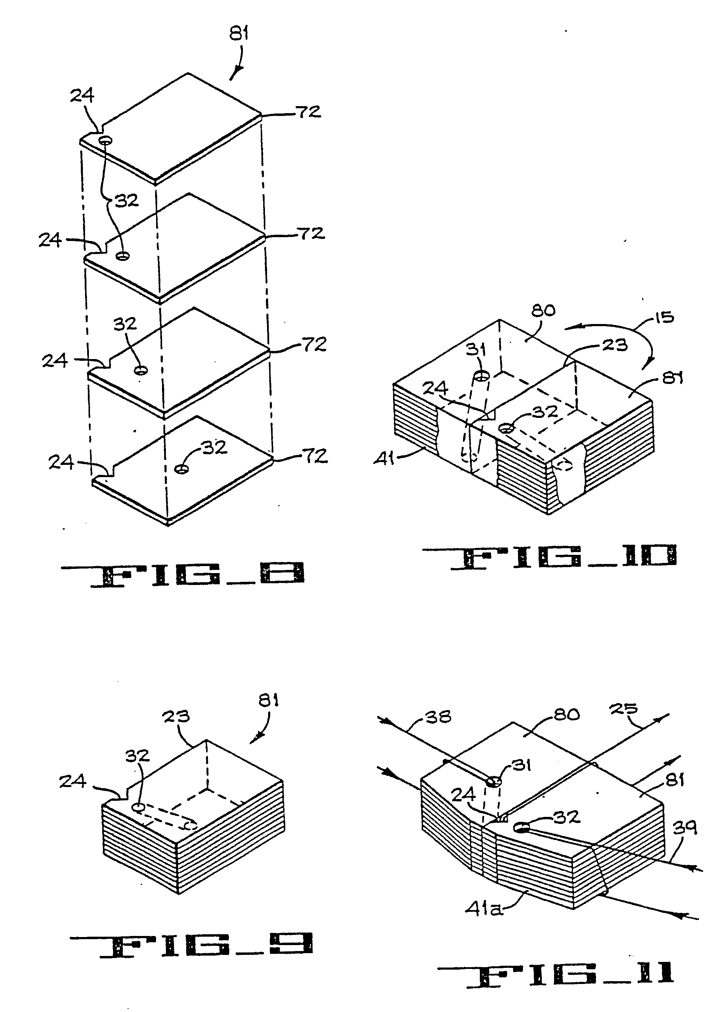

The manufacture of the transducer of FIGURES 2A and 4 is simplified, specifically with respect to obtaining an exponential wedge shape, by the embodiment of FIGURES 8 to 11 as described below.

FIGURE 8 shows an exploded perspective view of a preferred embodiment of a laminated magnetic core structure 81, comprising a plurality of thin magnetic lamination 72, for example 0.001 inches thick, of which only four laminations are shown for clarity. The laminations 72 may be, for example, etched from a sheet of a suitable magnetic material, for example, permalloy or mumetal HiMu 80. In FIGURE 8 the overall shape and size of all laminations is identical, with the exception of the apertures 32, which are progressively displaced from lamination to lamination in such a way that when all the respective laminations are stacked as shown in FIGURE 9 the resulting aperture corresponds to the previously described aperture 32 for accommodating the control windings 39 as shown in FIGURE 4.

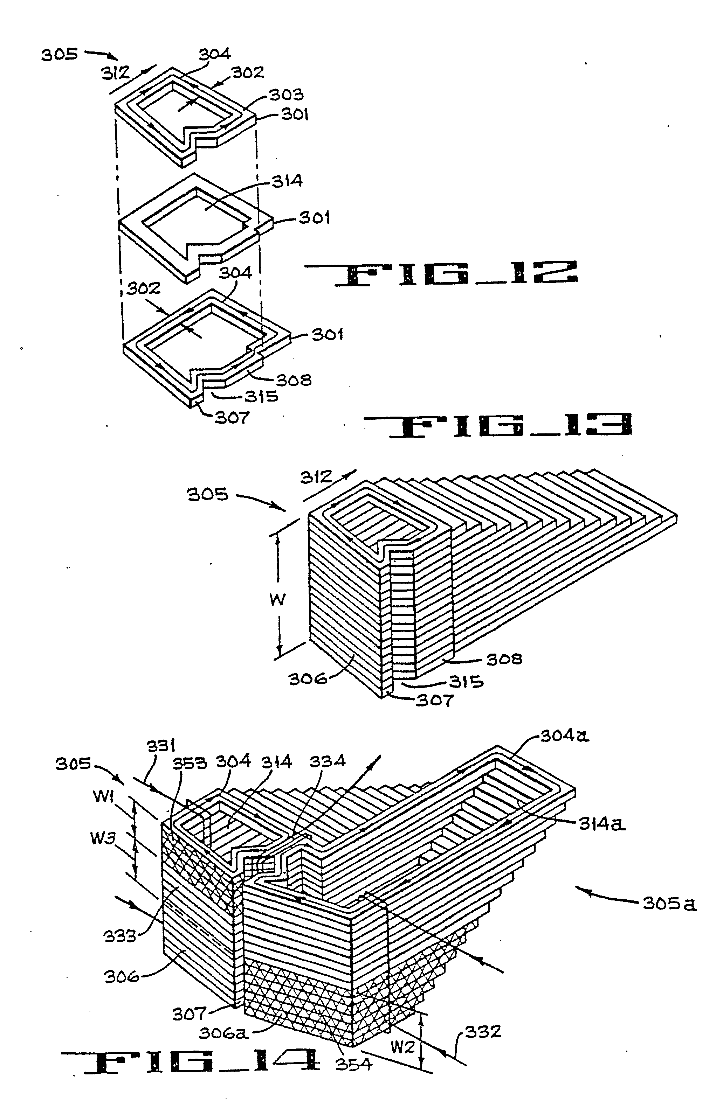

The stacked laminations of FIGURE 9 are bonded, for example by epoxy, utilizing well known bonding techniques to form a laminated head core half 81, which corresponds to the previously described half core 22 of FIGURE 4. Two corresponding laminated half cores 80, 81 are lapped at their respective gap planes 23 and a nonmagnetic transducing gap forming material, for example, silicon dioxide is vacuum sputtered thereon utilizing known sputtering techniques. The corresponding core halves 80, 81 are assembled in such a way that one core half is rotated 180 degrees with respect to the other core half as shown by arrow 15 in FIGURE 10 so that the respective control winding apertures 31, 32 extend inversely symmetrically to the gap plane 23 and face 41, respectively, similarly as previously described with respect to FIGURE 4.

The assembled core halves 80, 81 are bonded together with epoxy utilizing known bonding techniques. The resulting laminated core structure 80, 81 is preferably contoured at the transducer face 41 to obtain a desired contour as shown at 41A in FIGURE 11 and to obtain a desired transducing gap depth. Thereafter the control windings 38, 39 are arranged around each core half 80, 81 with their respective portions 51, 52 extending through apertures 31, 32 similarly as it has been described with reference to FIGURES 2A and 4. The transducing winding 25 is wound around the rear portion of cores 80, 81 generally symmetrically thereto through a winding window 24. It is noted, that the relative placement of transducing winding 25 with respect to the control windings 38, 39 is not critical in the embodiment of FIGURE 4 or 11, respectively, as long as the transducing winding does not link the control flux path.

While the embodiment of FIGURES 8 to 11 yields a resulting core structure which is basically similar to that of FIGURE 4, it has the advantage of eliminating drilling through the core to obtain control winding windows. It will be appreciated that by making each lamination 72 with a properly located control winding window therein, any desired window shape, for example exponential, can be obtained with relative ease.

A further preferred embodiment of the electromagnetically controlled scanning transducer of the invention is shown in FIGS. 12 to 16. As it will follow from the description below, this embodiment has an advantage over the previously described embodiments of obtaining a more uniform saturation of cross sectional areas in a direction perpendicular to the gap plane. In addition, a desired magnetic core shape, such as having exponentially increasing cross sectional areas can be obtained in a simplified manner. At the same time a desired sharp permeability-to-flux density gradient is obtained between the saturated and unsaturated regions at the transducer face, thereby enhancing the definition of the transducing zone.

With reference to FIGURE 12, a plurality of magnetic laminations 301 is stacked to form a laminated core stack 305. Each lamination has a central opening 314 which serves as a control winding window. A closed control flux path 304 is formed in the plane 303 of each lamination around the control winding window 314. Adjacent laminations in the stack 305 have gradually increasing lengths of control flux paths 304. The foregoing is obtained as shown in FIGURE 12, by gradually increasing the depth of adjacent laminations in the direction of arrow 312 thereby increasing the flux path reluctances. Preferably each lamination has the same thickness and a substantially constant width 302 in the direction perpendicular to the control flux path 304. As an example, the laminations 301 may be made of mumetal HiMu80, permalloy, or amorphous metal, having a thickness of 0.0001 to 0.001 inches.

A groove 315 for accommodating transducing windings is provided inwardly of a transducing gap plane 308. The depths of the laminations 301 may increase linearly, exponentially or in any other desired relationship to obtain the above-mentioned desired increase in flux path lengths. In this embodiment an exponential increase is provided to obtain a desired steep permeability versus flux density gradient between adjacent cross-sectional areas 303 across the transducer width W for reasons previously described with reference to the foregoing transducer embodiment.

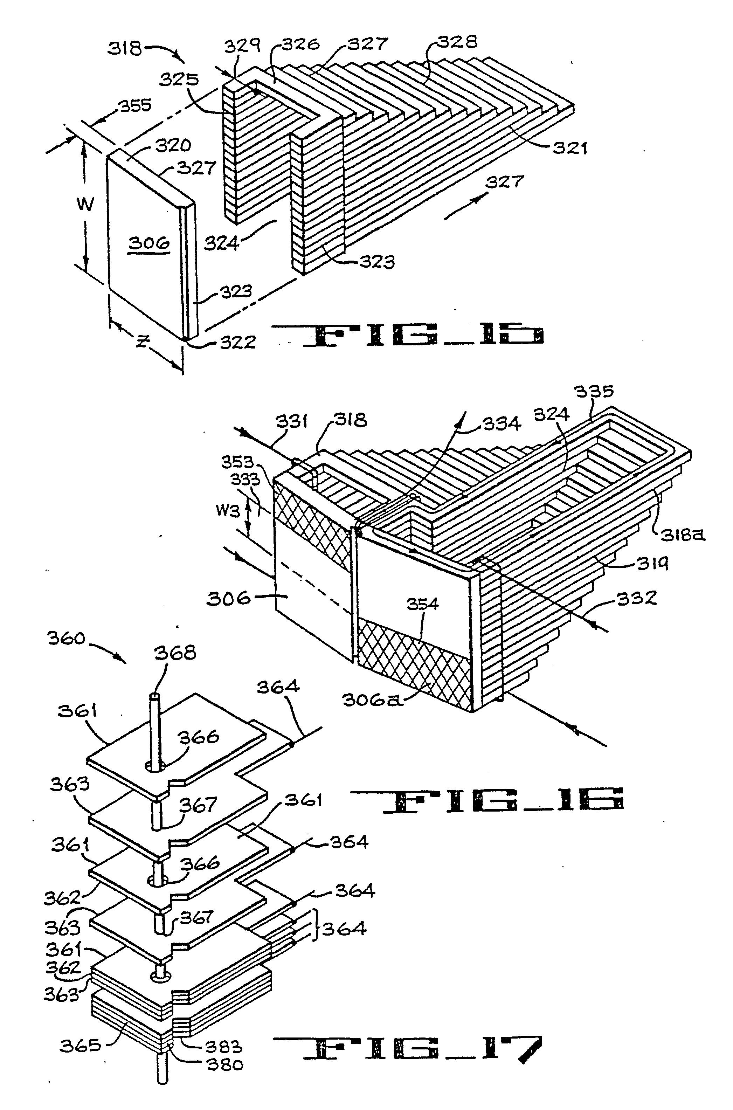

The stacked laminations 301 are bonded together in a manner similar to the previously described embodiment of FIGURES 8 to 11. A resulting half-core stack 305 is shown in FIGURE 13. Two corresponding stacks 305, 305a are assembled and joined together as shown in FIGURE 14, with their respective transducing gap planes 308 abutting and with a nonmagnetic transducing gap forming material disposed therebetween, utilizing techniques similar to those previously described with respect to the embodiment of FIGURES 8 to 11. It is seen from FIGURE 14 that the corresponding core stacks on each side of the transducing gap are oppositely oriented as follows. These core stacks are assembled such that the control flux path lengths 304 in each core 305, 305a, increase in opposite directions across the width W of the transducer. These gradually increasing flux path lengths serve to obtain differential saturation at the face 306 on opposite sides of the transducing gap 307, for example, as shown by cross-hatched areas 353 and 354 in FIGURE 14. Respective widths W1, W2 of the saturated regions 353, 354 are selected such that a desired unsaturated, highly permeable transducing zone 333 of a desired width W3 is obtained at the face 306 by overlapping unsaturated regions, similarly as previously described with reference to FIGURE 4.

As shown in FIGURE 14, respective control windings 331, 332 are wound around each core half 305, 305a through control winding windows 314, 314a, preferably in the proximity of the transducer face 306, 306a. A transducing signal winding 334 is wound around the assembled cores 305, 305a through the transducing winding window 315. Transducing zone 333 can be scanned across the width W of the transducer for example by utilizing a control circuit similar to that previously described with reference to FIGURE 3A.

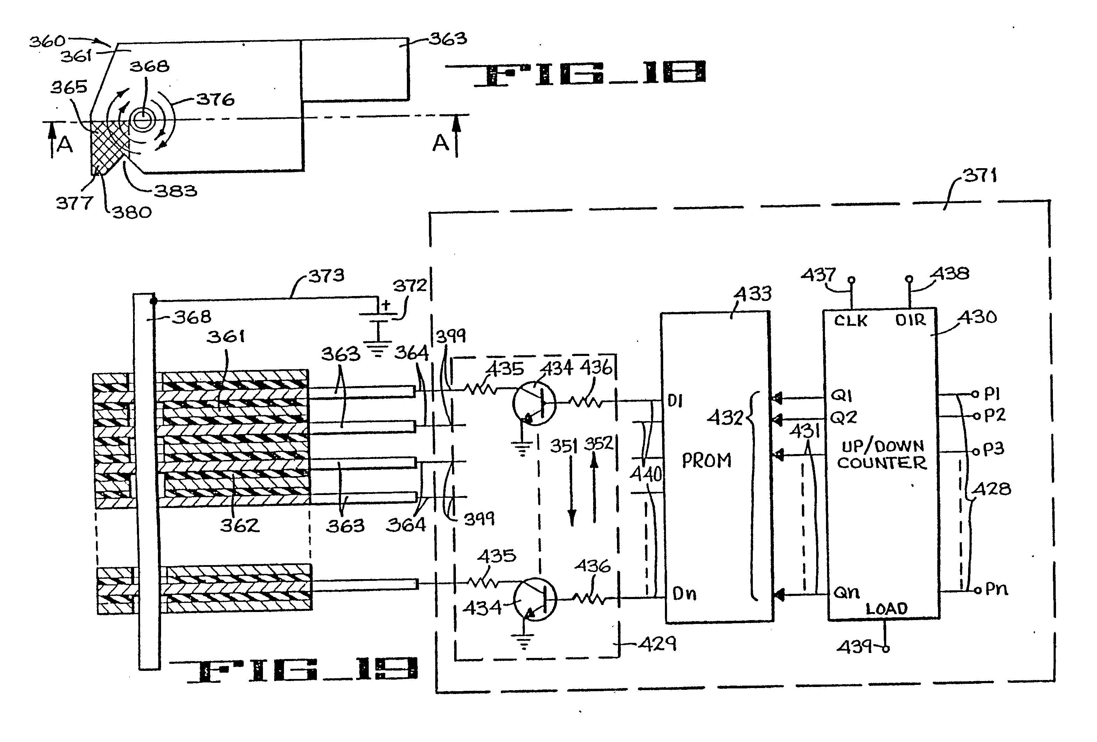

A variation in the design of transducer structure of FIGURES 12 to 14 is described below with reference to FIGURES 15 and 16.

FIGURE 15 shows one half of a composite head core 318 which differs from the above-described core 305 of FIGURE 13 in that it has a monolithic front core 320 and a laminated back core 321, which are integrally joined together, for example by epoxy bonding at confronting surfaces 325, 327 to eliminate air gaps. The front core 320 may be made, for example, from a block of magnetic ferrite material such as PS52B. A groove 322 is provided in front core 320 inwardly of a transducing gap plane 323 to obtain a transducing winding window.

The laminated back core 321 is formed·of a plurality of individual U-shaped laminations 326 in a manner similar to that previously described with respect to FIGURES 12 to 14, with the exception of having an open control winding window 324 extending inwardly of a front surface 325. The respective laminations have a substantially constant width 329 in the direction perpendicular to a control flux path 335 extending in the lamination plane as it has been previously described with respect to FIGURE 12 and as shown in FIGURE 16. Similarly as in the embodiment of FIGURE 14, adjacent laminations have gradually increasing depths in the direction 327 to obtain oppositely increasing control flux paths lengths and thus oppositely increasing reluctances in each core 318, 319 across the transducer width W. While that increase may be linear, it is preferably exponential, to maximize the permeability to flux density gradient as previously described with reference to the foregoing embodiments of the invention.

The integrally joined front core 320 and back core 321 form a closed low reluctance control flux path as shown at 335 in FIGURE 16. The respective back core laminations in the stack 321 are in close physical contact with each-other to reduce magnetic losses. Further assembly of the oppositely oriented corresponding cores 318, 318a, and providing them with transducing and control windings is similar to above-described FIGURES 12 to 14 and therefore the description thereof will not be repeated herein.

It follows from the above description that in the embodiment of FIGURES 12 to 16, a substantially constant cross sectional area of the laminations is maintained in a direction perpendicular to the control flux path while the lengths of control flux paths gradually increase differentially, that is in opposite directions in the confronting cores 318, 318a. To assure that the face 306, 306a of the transducer will become saturated before saturating the other magnetic core portions, in the embodiments of FIGURES 12 to 16 the width 329 of the flux path 304 along the face 306, 306a is preferably made slightly smaller than the width along the rest of the flux path.

It is an additional advantage of the embodiments of FIGURES 15, 16 that the monolithic front core 320 may be made of a material different from the back core 321. For example the front core material may have magnetic anisotrophy with an easy axis of magnetization oriented in perpendicular to the transducing gap plane to further enhance the transducing zone definition.

It is seen from comparison with the embodiment of FIGURE 4 that progressive saturation of the oppositely oriented confronting cores 305, 305a having gradually increasing control flux paths lengths in opposite directions is similar to saturating the oppositely oriented wedge sections of the embodiment of FIGURE 4. Consequently, the operation of the embodiments of FIGURES 12 to 16 and of FIGURE 4 is similar in that the transducer face is differentially saturated on opposite sides of the transducing gap and that a high permeability transducing zone is formed which can be continuously moved or scanned along the transducer width. However, in the embodiments of FIGURES 12 to 16 are different in that the entire lamination planes are saturated including the face 306, 306a rather than only a portion thereof as in the previous embodiments.

It will be understood that the laminated cores in the above-described embodiments are provided for manufacturing convenience, particularly, to facilitate obtaining a desired core shape, such as having exponentially increasing cross-sectional areas. Consequently, these magnetic laminations are in physical contact with each other and no magnetic or electrical insulation is needed between them.

An alternative embodiment of the present invention will be described now with reference to FIGURES 17 to 25, where saturation of the face part is obtained by a control winding in the form of a conductive drive line 368, 368a extending through each confronting core, respectively, in close proximity to both the transducer face and transducing gap, respectively.

In this embodiment the scanning transducer half-core 360 has discrete magnetic laminations 361 whose magnetic circuits are separated from each-other by nonmagnetic, electrically conductive laminations 363. The laminations 363 are conductively connected to the drive line 368 and each two conductive laminations and a portion of the drive line between them represent a current turn around a magnetic lamination 361. Each magnetic lamination becomes saturated by applying control current to surrounding conductive laminations and thus to a corresponding portion of the drive line extending therethrough. A transducing track zone is obtained by one or more non-saturated laminations and it can be scanned or moved along the transducer width by switching on/off conductive laminations representing current turns, as it is described below in more detail.

In addition to saturating the transducer face the presently described embodiment has a further advantage over the prior art transducers that a sharp step-like permeability-to-flux density gradient across the transducer face is obtained. That characteristic is virtually independent of the permeability versus flux density characteristic of the magnetic lamination materials, as it will follow form further description.

FIGURE 17 shows an exploded view of one transducer core half 360 in which magnetically permeable laminations 361 are stacked and interposed between conductive laminations 363. A layer of electrically insulating material 362, for example silicon dioxide 0.0001 inch thick is preferably sputtered on the respective planar surfaces of each magnetic lamination 361 to electrically insulate them from the conductive laminations 363. Each conductive lamination 363´ has a lead wire 364 attached thereto, for example by soldering, at a rear portion thereof, opposite a transducer face 365. As an example, the magnetic laminations may be made of mumetal HiMu80 or amorphous metal, 0.001 inch thick, the conductive laminations of copper, 0.0005 inch thick. The respective laminations 361, 363 have overlapping apertures 366, 367 provided therein to accommodate a conductive drive line 368 which is conductively connected to each lamination 363, for example by soldering, but it is electrically insulated from the magnetic laminations.

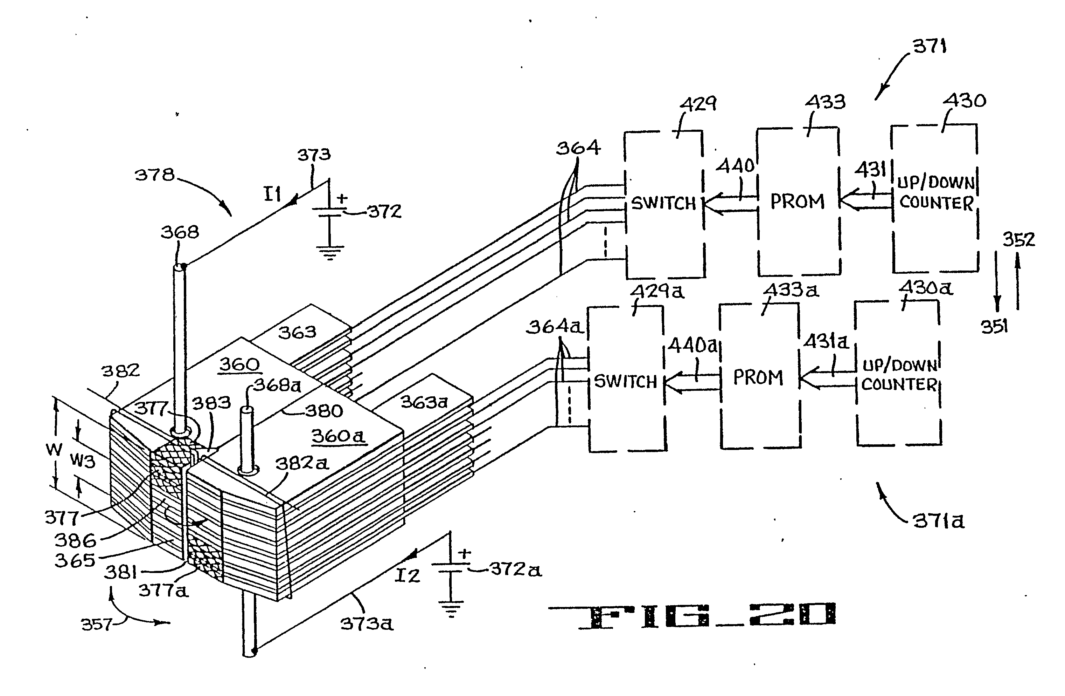

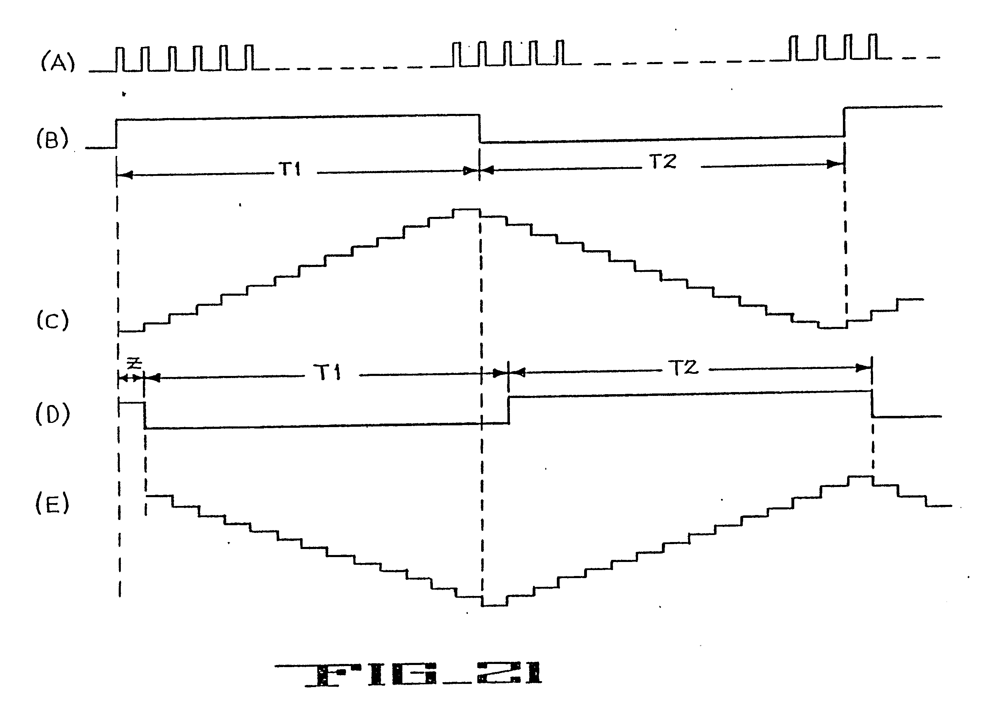

FIGURE 18 shows a plan view of the assembled laminated half-core stack 360 of FIGURE 17. FIGURE 19 shows a cross-sectional view of the lamination stack 360 taken along line A-A of FIGURE 18, and a schematic block diagram of a lamination switcher circuit 371 connected to the stack. Because of preferably utilizing two identical conductive lamination switcher circuits 371, 371a as it is shown in FIGURE 20, only one circuit 371 is shown in FIGURE 19 in more detail and will be described below.

As it is seen from FIGURE 19, one end of the conductive drive line 368 is connected to one pole of a control current source 372, whose other pole is grounded. Each lead wire 364 is connected to one of a plurality of outputs 399 of the conductive lamination switcher circuit 371.

As an example, the conductive lamination switcher circuit 371 comprises an up/down counter 430, a programmable read only memory (PROM) 433 and a transistor switch array 429. The switch array 429 comprises a plurality of transistor switches each having a transistor 434, a current setting collector resistor 435 and a base resistor 436. The up/down counter 430 has a clock signal input 437, a directional signal input 438, preset inputs PI to Pn 428, a load input 439, and a plurality of outputs QI to Qn 431. Each output 431 is connected to one input 432 of PROM 433. PROM 433 has a plurality of outputs D1 to Dn 440, each connected to the base resistor 436 of one switch 434 of the array 429. Each collector resistor 435 is connected to one conductive lamination 363 via a lead wire 364, respectively. The emitter of each transistor 434 is grounded.

FIGURE 20 shows an electromagnetically controlled scanning a magnetic transducer 378 obtained by joining two corresponding core halves 360, 360a. A transducing gap 381 of a suitable nonmagnetic material, for example silicon dioxide is provided on the transducing gap plane 380 of one or both core halves 360, 360a utilizing well known gap forming techniques. The respective core halves 360, 360a are assembled together inversely symetrically as follows. The core halves are reversed by rotating one core half 180 degrees with respect to the other core half, as indicated by arrow 357, so that the respective ends of conductive rods 368, 368a which are connected to current sources 372, 372a are reversed with respect to each-other, that is they are located on opposite sides across the transducer width W. A transducing signal winding 382, 382a is wound around the core halves and through a winding window 383 for use as a record/playback signal winding. The respective conductive laminations 363, 363a, of each core half 360, 360a are coupled via respective lamination switcher circuits 371, 371a to current sources 372, 372a to magnetically saturate sequentially the face of selected laminations in each core half, as it will be described below.

An example of the operation of the scanning transducer of FIGURE 20 will be described now with reference to FIGURES 21 to 25.

With reference to FIGURE 21, counters 430, 430a at their clock inputs 437, 437a receive a clock signal A having a frequency corresponding to a desired lamination switching frequency. One counter, for example 430 receives at input 438, a directional signal B, while the other counter, for example 430a receives a directional signal D of opposite polarity with respect to signal B. One of the counters is preset at 428 to an initial count which differs from the preset count of the other counter to obtain an offset count corresponding to a line interval Z as shown in FIGURE 21. When one counter, for example 430 counts up, as it is shown at C in FIGURE 21, the other counter 430a counts down simultaneously therewith, as shown at E. PROM's 433, 433a are programmed to convert the sequential binary count obtained at outputs 431 of counters 430, 430a to a sequential output signal at outputs 440 as it is shown, for example in TABLE 1 below:

## Binary output

| at 431: | Output signal at 440: | | | | |
|---|---|---|---|---|---|
| P1 to Pn | D1 | D2 | D3 | D4 | D5...Dn |
| 0 | 0 | 0 | 0 | 0 | 0....0 |
| 1 | 1 | 0 | 0 | 0 | 0....0 |
| 2 | 1 | 1 | 0 | 0 | 0   0 |
| 3 | 1 | 1 | 1 | 0 | 0   0 |
| 4 | 1 | 1 | 1 | 1 | 0   0 |
| 5 | 1 | 1 | 1 | 1 | 1... 0 |
| • | • | • | • | • | • • • • • • |
| • | • | • | • | • | • • • • • • |
| • | • | • | • | • | • • • • • • |
| • | • | • | • | • | • • • • • • |
| n | 1 | 1 | 1 | 1 | 1.....1 |

TABLE 1

As it is seen from FIGURE 19 when any output D1 to Dn at 440 is activated, the particular transistor switch 434 to 436 connected thereto is switched on and it connects the particular conductive lamination 363 to the current source via a portion of the lead wire 364 and ground.

With further reference to FIGURE 19 it is seen that when the uppermost conductive lamination 363 at the top of the stack 360 is connected with the current source 372, the first magnetic lamination 361 is threaded by the control current turn. When the next transistor switch is activated in the direction 351, both the first and the second magnetic laminations 361 will be threaded by the current turn, and so on, until the lowermost lamination of the stack is switched into the circuit, when all the magnetic laminations 361 of the stack are threaded by the current turn.

In each magnetic lamination which is threaded by a control current carrying turn, a magnetic flux is induced around the drive line 368, as shown by flux lines 376 in FIGURE 18. The magnitude of the control current in the drive line 368 is selected large enough to saturate a portion of each surrounding lamination. The saturated portion extends in an area defined by the face 365, transducing gap plane 380 and the drive line 368, as indicated by a cross-hatched area 377 in FIGURES 18 and 20.

From a comparison with the previously described embodiment shown in FIGURES 2A and 4 it is seen that the relatively close location of the drive line 368 to both the face 365 and the transducing gap plane 380 in FIGURE 19 is similar to the location of the winding portion 51 within core 21 of FIGURES 2A and 4. However, in that previously described embodiment the gradual saturation of the face within each core is obtained by a selected angled relationship of the control winding portion 51 to the face and gap plane, respectively, and by selectively varying the magnitude of a control current applied to the control winding. The present embodiment differs in that the saturated region of the transducer is obtained by selectively applying a control current to a portion of the conductive drive line which in turn saturates the face part only of those magnetic laminations which are threaded by the current turn. The saturated region is moved or scanned across the transducer width by switching the control current into different portions of the drive line.

To obtain saturation at the face 306 of each lamination 361 prior to saturating other more distant portions thereof, the drive line 368 is preferably arranged relatively close to face 306 and gap plane 380 and substantially at equal distances therefrom.

With reference to FIGURE 20, to obtain scanning of the transducing zone 386 across the transducer width W, one switcher circuit for example 371 is switched in one direction, for example as indicated by arrow 351 while the other switcher circuit 371a is switched synchronously therewith in the opposite direction 352. Thereby control current I1 from the current source 372 is sequentially applied to conductive laminations 363 of one core half 360, as it has been described with reference to FIGURE 19. The other switcher circuit 371a applies a current I2 from source 372a sequentially to conductive laminations 363a of the other core half 360a. The thusly oppositely switched control currents I1, I2 gradually saturate the face portions of confronting core halves in opposite directions across the transducer width while the number of active conductive laminations of each core varies inversely linearly, to maintain a constant transducing zone width. The previously mentioned counter offset Z obtained by pre-setting one of the counters with respect to the other counter assures that one or more laminations in each stack will remain unsaturated at any time to obtain an overlapping transducing zone 386 across the gap 381, having a desired constant width W3.

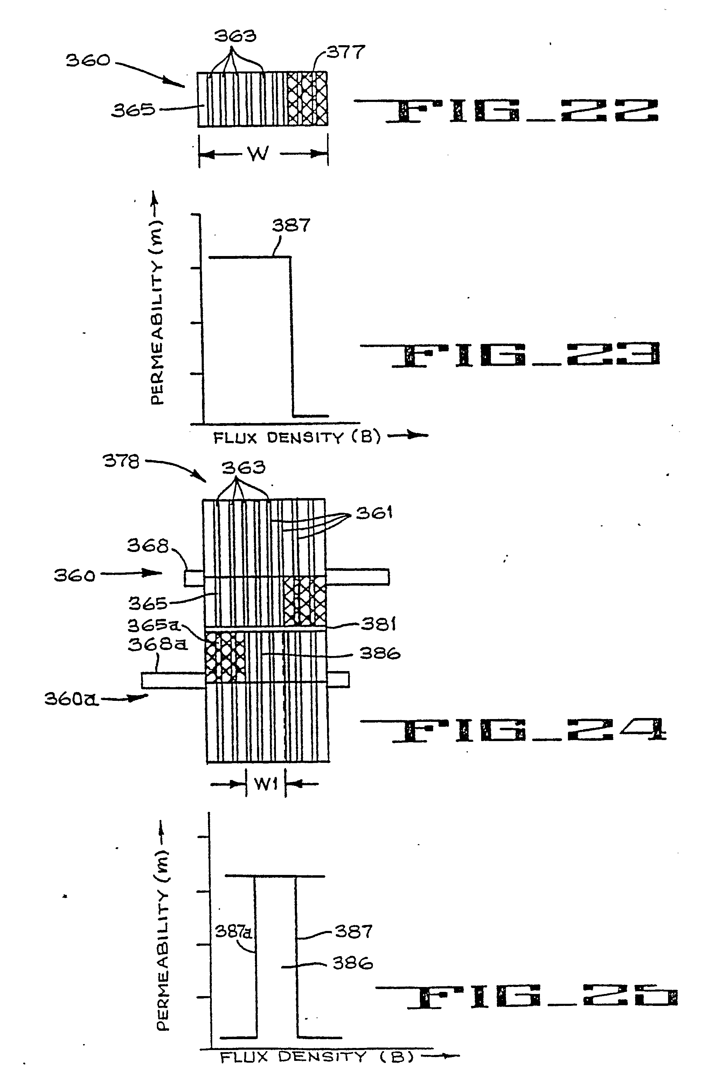

The operation of the scanning transducer of FIGURES 17 to 20 is further explained with reference to FIGURES 22 to 25. FIGURE 22 is a schematic front view of the face portion 365 of one core half 360 of FIGURE 20, rotated by 90 degrees. A saturated portion 377 is shown by a cross-hatched area. For better comparison with the previously described characteristic of FIGURES 6 to 7B, as an example, a similar magnetic material is selected for the laminations 361, preferably mumetal HiMu80. In FIGURE 23 a flux density (B) versus permeability (m) characteristic 387 of the transducer face part 365 of FIGURE 22 is shown.

It is seen from FIGURE 23 that the presently described embodiment of the invention has the advantage of obtaining a sharp step-like permeability-to-flux density gradient across the transducer width W. The latter feature results from separately "threading" each lamination by a respective control current turn. Consequently, while control current is supplied to a particular current winding surrounding a magnetic lamination to saturate its face part, an adjacent magnetic lamination, which has its control current turned off will not have any control flux induced therein. Thus a desired sharp change in flux density versus permeability results between adjacent nonsaturated and saturated areas of the face part which change is virtually independent of the permeability versus flux density characteristic of the magnetic lamination material.

FIGURE 24 is a schematic front view of the face portions 365, 365a of the oppositely oriented assembled core halves 360, 360a shown in FIGURE 20, rotated by 90 degrees. By opposite orientation it is understood that the respective control currents of each core half are switched in opposite directions across the width of the transducer to obtain differential saturation of the transducer face on opposite sides of the transducing gap 381, as it has been described with reference to FIGURE 20.

FIGURE 25 illustrates two superposed oppositely oriented characteristics 387, 387a of FIGURE 23each representing the characteristic of one core half 360, 360a of FIGURE 24. A resulting well defined high permeability transducing zone 386 is obtained as shown by an area between the superposed characteristics.

It will be understood from the foregoing description that scanning or moving of the transducing zone 386 along the width W of the transducer in this embodiment is provided in discrete steps across the transducer width, each step corresponding to the combined thicknesses of a magnetic lamination, a conductive lamination and insulation layers, respectively.

It will be further understood that other implementations of the switcher circuits 371, 371a are possible. For example, instead of utilizing circuits 429, 430 and 433 of FIGURE 19, switching of the laminations may be accomplished by utilizing a plurality of resistors (not shown), each resistor having a terminal connected to one conductive lamination. The values of the resistors connected to adjacent laminations of each core half increase in opposite directions across the transducer width. The other terminals of the resistors of each core half are connected to one pole of a variable voltage source, while the other, opposite pole of the voltage source is connected to one end of the conductive drive line. By varying the voltage in each core half in opposite directions, the subsequent laminations of the opposite stacks become sequentially differentially saturated similarly as it has been described with respect to the embodiment of FIGURES 17 to 25.

As a further alternative, instead of scanning the transducing zone symmetrically in both directions as shown at B and E in FIGURE 21, where the respective time intervals T1, T2 are equal, it is possible to shorten one of the intervals with respect to the other one. Thus a relatively long scanning interval in one direction and a fast return of the scanning zone in the other direction can be obtained by adjusting the timing of the switcher circuits 371, 371a accordingly.

14

**Claims**

1. A magnetic transducer, comprising: a magnetic core having confronting core portions (20, 21; 360, 360a) with poles abutting at a transducing gap plane to define a transducing gap (26) therebetween: control means associated with each said core portion for selectively saturating a respective face portion (57, 58; 377, 377a) thereof adjacent said transducing gap such that each saturated face portion delimits in a respective one of two opposite senses a respective, adjacent nonsaturated permeable face portion, said permeable face portions overlapping across the transducing gap to define a permeable transducing zone (56 or 386).

2. A magnetic transducer according to claim 1 in which the control means are arranged to gradually saturate the face portions in respective opposite senses to move the transducing zone.

3. A magnetic transducer according to claim 1 or 2 wherein each magnetic core portion has a plurality of stacked magnetic laminations (361) separated by nonmagnetic conductive laminations (363), each said control means comprising a conductive drive line (368) extending across said magnetic core width inwardly of and at a selected distance from the plane (380) of said transducing gap and the respective transducer face portion, said drive line being conductively connected with said conductive laminations and wherein said conductive laminations of each magnetic core portion are further coupled to selectively apply control currents to the respective conductive drive line for selectively saturating said transducer face portions.

4. A magnetic transducer according to claim 3, further comprising a control current source (372), one pole of the current source being coupled to one end of said conductive drive line, and further comprising a switch means (429) for selectively connecting each conductive lamination to another, opposite pole of said current source.

5. A magnetic transducer according to claim 4 wherein said switching means is coupled to sequentially connect adjacent conductive laminations of one core half in one direction to the current source while sequentially disconnecting adjacent conductive laminations of the other core half in said direction from the current source.

6. A magnetic transducer comprising: a magnetic core having two core portions (360) defining a transducing gap therebetween, each core portion having stacked magnetic laminations (361) separated by nonmagnetic conductive laminations (363); a conductive drive line (368) extending across a width of each said core portion, being spaced from both said transducing gap plane and a transducer face, said conductive drive line being conductively connected to said conductive laminations, and a switching means (429) coupled to said conductive laminations of each said core portion to selectively apply respective control currents to said conductive drive lines to differentially saturate said magnetic laminations at said transducer face.

7. A magnetic transducer comprising: a magnetic core having two laminated confronting core portions (360) with poles abutting at a transducing gap plane to define a transducing gap intersecting a face of the core; stacked magnetic laminations (361) in each core portion being separated by nonmagnetic conductive laminations (363); a respective conductive drive line (368) extending across a width of each magnetic core portion, said drive line being conductively connected with said conductive laminations for selectively saturating a portion of each said magnetic lamination adjacent said transducing gap; and means (429) for sequentially applying respective control currents to said conductive laminations of each confronting core in opposite order of succession to obtain in succession said saturation of portions of selected magnetic laminations, such that at least one confronting magnetic lamination of each core is non-saturated to provide a permeable transducing zone (386) extending across the transducing gap at said face.

20

21

7

25

16

24

27

28

22

42

41

26

# FIG_IA

(PRIOR ART)

43

5

42

# FIG_IB

43

20

8

21

$I_1$

7

25

57    47

W1

24    16

W3

56

41

46

40    48

16

$I_2$    22

26

W2    W    9

58

**FIG_IC**

8    56    57    46    9

$I_1$    $I_2$

40    26    58

**FIG_ID**

FIG_IE

FIG_IF

FIG_2A

FIG_2B

FIG_2C

FIG_2D

FIG_3A

FIG_3B

FIG.4

FIG.5

**FIG_6**

**FIG_7A**

**FIG_7B**

FIG_8

FIG_10

FIG_9

FIG_11

FIG_12

FIG_13

FIG_14

FIG_15

FIG_16

FIG_17

FIG_18

FIG_19

EP 0 395 119 A2

FIG_20

EP 0 395 119 A2

FIG_21

EP 0 395 119 A2

FIG_22

FIG_23

FIG_24

FIG_25